(19) Europäisches Patentamt
European Patent Office
Office européen des brevets

(11) **EP 1 186 405 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **B32B 27/36**, C08J 5/18

(21) Anmeldenummer: **01118336.5**

(22) Anmeldetag: **27.07.2001**

(54) **Koextrudierte, biaxial orientierte Polyesterfolie mit guter Metallhaftung, Verfahren zu ihrer Herstellung und ihre Verwendung**

Coextruded, biaxially oriented polyester film with good metal adhesion, its use, and process for its production

Films en polyester coextrudés et orientés biaxialement ayant une bonne adhésion aux métaux, leur utilisation et leur production

(84) Benannte Vertragsstaaten:
**DE GB IT**

(30) Priorität: **04.08.2000 DE 10038131**

(43) Veröffentlichungstag der Anmeldung:
**13.03.2002 Patentblatt 2002/11**

(73) Patentinhaber: **Mitsubishi Polyester Film GmbH 65203 Wiesbaden (DE)**

(72) Erfinder:
• **Bartsch, Stefan, Dr.**
  **65199 Wiesbaden (DE)**
• **Peiffer, Herbert, Prof. Dr.**
  **55126 Mainz (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:
**EP-A- 0 580 404        EP-A- 1 055 515
US-A- 4 687 699**

• **PATENT ABSTRACTS OF JAPAN vol. 014, no. 228 (M-0973), 15. Mai 1990 (1990-05-15) & JP 02 057339 A (TOYOBO CO LTD), 27. Februar 1990 (1990-02-27)**

**Beschreibung**

Die Erfindung beschreibt die Verwendung einer koextrudierten, biaxial orientierten, mehrschichtigen Polyesterfolie mit guter Metallhaftung aus mindestens einer Basisschicht B, mindestens einer metallhaftenden Deckschicht A und vorzugsweise einer weiteren Deckschicht C, wobei die metallhaftende Deckschicht A eine Metallhaftung von mindestens 4 N/25 mm aufweist, in Bag-in-box Verpackungen.

In der EP-A-0144 878 werden Folien mit einer Copolyesterbeschichtung auf Basis von Isophthalsäure, aliphatischer Dicarbonsäure und Sulfoisophthalsäure beschrieben, die bereits eine gute Haftung zu Metallen aufweisen. Für gewisse Anwendungen ist diese Metallhaftung jedoch noch verbesserungsfähig.

In der EP-A-0 035 835 wird eine Polyesterfolie beschrieben, die eine siegelfähige Deckschicht auf Basis von Isophthalateinheiten enthält. Die hohe Schichtdicke dieser Deckschicht von ≥ 2 µm führt dazu, dass sich nach der Metallisierung Risse in der Metallschicht bilden, die zu einer Einbuße der Barriereeigenschaften führen und daher nicht akzeptabel sind.

Die EP-A-1 055 515 beschreibt ein Sammelpacksystem, das eine siegelfähige Gebindefolie enthält, die aus einer biaxial streckorientierten, durch Coextrusion hergestellten, symmetrisch oder asymmetrisch aufgebauten, mehrschichtigen Polyesterfolie besteht, wobei die Siegelschichten modifizierte Polyestercopolymere enthalten. Die Verwendung einer solchen Folie in Bag-in-box Verpackungen, bei der die Folie eine hohe Metallhaftung aufweist, konnte dem Stand der Technik nicht entnommen werden.

Aufgabe der vorliegenden Erfindung war es, eine Polyesterfolie mit hoher Metallhaftung für die Verwendung in Bag-in-box Verpackungen bereitzustellen, die die Nachteile des Standes der Technik nicht aufweist.

Die Aufgabe wird durch die Bereitstellung der beanspruchten, koextrudierten, biaxial orientierten mehrschichtigen Polyesterfolie mit guter Metallhaftung gelöst, bei der die Polyesterfolie aus mindestens einer Basisschicht B und mindestens einer Deckschicht A besteht, wobei die Deckschicht A

(a) eine Metallhaftung (nach der Metallisierung) von mehr 4 N/25 mm und
(b) eine Schichtdicke von ≤ 1,6 µm aufweist.

Die Folie gemäß der vorliegenden Erfindung zeigt eine ausgesprochen hohe Haftung zu metallischen Beschichtungen und überraschender Weise keine Risse in der auf die Deckschicht A aufgebrachten Metallschicht. Sie zeichnet sich außerdem durch eine wirtschaftliche Herstellung und eine gute Verarbeitbarkeit bei sonst gleich bleibenden oder verbesserten optischen Eigenschaften aus. Außerdem kann die Folie auch auf schnetllaufenden Verarbeitungsmaschinen verarbeitet werden. Bei der Herstellung der Folie (ohne die Metallschicht) ist weiterhin gewährleistet, dass immanent anfallendes Verschnittmaterial als Regenerat in einer Menge bis zu 60 Gew.-%, bezogen auf das Gesamtgewicht der Folie, wieder der Extrusion für die Folienherstellung zugeführt werden kann, ohne dass dabei die physikalischen Eigenschaften der mit Regenerat in dieser Menge hergestellten Folie nennenswert negativ beeinflusst werden.

Die Folie eignet sich demnach hervorragend für den Einsatz in der flexiblen Verpackung und zwar insbesondere dort, wo eine hohe Metallhaftung voll zum Tragen kommt. Dies sind beispielsweise so genannte "Bag-in-box Verpackungen", in denen ein Mehrschichtverbund aus metallisierter PET-Folie und beidseitig hierauf kaschierter Polyethylen-Folie verwendet wird.

Die Folie gemäß der Erfindung ist zumindest zweischichtig und umfasst in dieser Ausführungsform als Schichten die Basisschicht B und die metallhaftende Deckschicht A. Unter einer »metallhaftenden« Deckschicht A ist eine Deckschicht zu verstehen, die aus einem Kunststoff besteht, der auf Grund seiner chemischen Zusammensetzung eine besonders hohe Affinität zu Metall hat und daher besonders gute Hafteigenschaften zu Metall besitzt.

Die Folie ist jedoch insbesondere dreischichtig und umfasst dann noch eine zusätzliche Deckschicht C, die gleich oder verschieden von der metallhaftenden Deckschicht A sein kann. Die Unteransprüche geben bevorzugte Ausführungsformen der Erfindung an, die nachstehend zusätzlich näher erläutert werden.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroximethyl-cyclohexan und Terephthalsäure (= Poly(1,4-cyclohexandimethylenterephthalat), PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphthalindicarbonsäuren (beispielsweise Naphthalin-1,4-oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil gradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Metallhaftende Deckschicht A:

Die bevorzugt durch Koextrusion auf die Basisschicht B aufgebrachte metallhaftende Deckschicht A ist auf Basis von Copolyestern aufgebaut und enthält im Wesentlichen solche Copolyester, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die Copolyester, die die gewünschten Metallhaftungseigenschaften bereitstellen, sind solche, die aus Ethylenterephthalatund Ethylenisophthalat-Einheiten und aus Ethylenglykol-Einheiten aufgebaut sind. Der Anteil an Ethylenterephthalat liegt im Bereich von 40 bis 99 mol-% und der entsprechende Anteil an Ethylenisophthalat im Bereich von 60 bis 1 mol-%. Bevorzugt sind Copolyester, bei denen der Anteil an Ethylenterephthalat im Bereich von 50 bis 95 mol-% und der entsprechende Anteil an Ethylenisophthalat im Bereich von 50 bis 5 mol-% liegt, und ganz bevorzugt sind solche Copolyester, bei denen der Anteil an Ethylenterephthalat im Bereich von 60 bis 85 mol-% und der entsprechende Anteil an Ethylenisophthalat im Bereich von 40 bis 15 mol-% liegt.

Nicht metallhaftende Deckschicht C:

Für die andere, nicht metallhaftende Deckschicht C oder für eventuell vorhandene Zwischenschichten können prinzipiell die gleichen Polyester verwendet werden, die zuvor für die Basisschicht B beschrieben wurden. Daneben können aber in einer besonderen Ausführungsform der Erfindung für die Deckschicht C auch die gleichen Polymeren wie für die Deckschicht A verwendet werden.

Metallhaftungseigenschaften:

Die gewünschten Metallhaftungseigenschaften und die gewünschte Qualität der Metallschicht (keine Risse) der erfindungsgemäßen Folie werden aus der Kombination der Eigenschaften des eingesetzten Copolyesters für die metallhaftende Deckschicht A und der Einstellung einer Schichtdicke im Bereich von ≤ 1,6 μm, vorzugsweise von ≤ 1,2 μm, besonders bevorzugt von ≤ 0,8 μm erhalten.

Die Metallhaftung von ≥ 4 N/25 mm wird erreicht, wenn für die metallhaftende Deckschicht A die oben näher beschriebenen Copolymeren verwendet werden. Zum Handling der Folie und der Verarbeitbarkeit kann die metallhaftende Deckschicht A modifiziert werden. Dies geschieht günstig mit Hilfe von geeigneten Antiblockmitteln mit einer ausgewählten Komgröße, die in einer bestimmten Menge der metallhaftenden Schicht zugegeben werden, und zwar derart, dass einerseits das Verblocken minimiert und andererseits die Metallhaftung nicht wesentlich verschlechtert werden.

Die Metallhaftung ist im Wesentlichen unabhängig von der Schichtdicke der Deckschicht. Jedoch wurde beobachtet, dass eine zu hohe Schichtdicke zu Rissen in der metallisierten Metallschicht führen kann. Überraschend wurde festgestellt, dass Folien mit Deckschichten im Bereich von > 1,6μm deutlich zu Rissbildung neigen. Die Dicke der metallhaftenden Deckschicht A der erfindungsgemäßen Folie ist daher kleiner/gleich 1,6μm einzustellen. Diese Risse können visuell z.B. in einem Lichtkasten oder im Lichtstrahl eines Diaprojektors erkannt werden und führen zu einer Herabsetzung der Sperreigenschaften der metallisierten Folie gegenüber Luftsauerstoff und Aromastoffen.

Die Basisschicht B kann zusätzlich Additive, wie Stabilisatoren und/oder Antiblockmittel enthalten. Die beiden anderen Deckschichten A und C enthalten zusätzlich Additive, wie Stabilisatoren und/oder Antiblockmittel. Die Additive werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang mitunter auch als Pigmente bezeichnet) sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Korngröße gewählt werden. Die Partikeln können den einzelnen Schichten in den jeweils vorteilhaften Mengen, z.B. als glykolische Dispersion während der Polykondensation oder über Masterbatches bei der Extrusion zugegeben werden.

Bevorzugte Partikel sind $SiO_2$ in kolloidaler und in kettenartiger Form. Diese Partikeln werden sehr gut in die Polymermatrix eingebunden und erzeugen nur geringfügig Vakuolen. Vakuolen verursachen im Allgemeinen Trübung und sind daher zweckmäßiger Weise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser im Bereich von kleiner/gleich 100 nm, bevorzugt von kleiner/gleich 60 nm und besonders bevorzugt von kleiner/gleich 50 nm, gemessen nach der Sedigraphmethode, und/oder Teilchen mit einem mittleren Primärpartikeldurchmesser im Bereich von größer/gleich 1 µm, bevorzugt von größer/gleich 1,5 µm, besonders bevorzugt von größer/gleich 2 µm, gemessen nach der Siebmethode, zu verwenden. Diese zuletzt beschriebenen Teilchen sollten jedoch keinen mittleren Partikeldurchmesser aufweisen, der größer ist als 5 µm.

Zur Erzielung der vorgenannten Eigenschaften der metallhaftenden Folie hat es sich als zweckmäßig erwiesen, die Menge an Antiblockmittel in der Basisschicht B niedriger zu wählen als in den beiden Deckschichten A und C. Bei einer dreischichtigen Folie vom genannten Typ wird in der Basisschicht B die Menge an Antiblockmittel auf einen ganz geringen Wert im Bereich von 0 bis 0,15 Gew.-%, vorzugsweise von 0 bis 0,12 Gew.-%, insbesondere jedoch von 0 bis 0,10 Gew.-% einzustellen. Die Korngröße der eingesetzten Antiblockmittel in der Basisschicht B ist prinzipiell nicht eingeschränkt, jedoch sind Antiblockmittel mit einer mittleren Korngröße von größer/gleich 1 µm besonders bevorzugt.

Zur Einstellung des genannten Eigenschaftsprofils der Folie weisen die Deckschichten A und C in einer besonders günstigen Ausführungsform mehr Pigmente (d.h. höhere Mengen an Antiblockmitteln) als die Basisschicht B auf. Die Pigmentkonzentration in diesen Deckschichten A und C liegt im Bereich von 0,0 bis 1,0 Gew.-%, vorteilhaft von 0,02 bis 0,8Gew.- %, insbesondere von 0,03 bis 0,6 Gew.-%. Beide Deckschichten A und C können gleiche Menge an Antiblockmittel enthalten oder die Menge in der metallhaftenden Deckschicht A kann geringer gewählt werden als in der nicht metallhaftenden Deckschicht C, um die gewünschten Eigenschaften zu verbessern oder das Verarbeitungsverhalten weiter zu optimieren.

In der vorteilhaften Verwendungsform besteht die Folie aus drei Schichten, der Basisschicht B und beidseitig auf dieser Basisschicht B aufgebrachten Deckschichten A und C.

Zwischen der Basisschicht B und den Deckschichten A und C kann gegebenenfalls noch eine Zwischenschicht angeordnet sein. Diese kann wiederum aus den für die Basisschicht B beschriebenen Polymeren bestehen. In einer besonders bevorzugten Ausführungsform besteht sie aus dem für die Basisschicht B verwendeten Polyester. Sie kann auch die ebenfalls beschriebenen Additive enthalten. Die Dicke der Zwischenschicht ist im Allgemeinen größer/gleich 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der besonders vorteilhaften dreischichtigen Ausführungsform dererfindungsgemäßen Folie liegt die Dicke der Deckschicht C im Bereich größer/gleich 0,1 µm, vorzugsweise im Bereich von 0,2 bis 4,0 µm, vorteilhaft im Bereich von 0,2 bis 3,5 µm, insbesondere im Bereich von 0,3 bis 3 µm, ganz besonders bevorzugt im Bereich von 0,3 bis 2,5 µm, wobei die Deckschichten A und C gleich oder verschieden dick sein können.

Die Gesamtdicke der erfindungsgemäßen Polyesterfolie kann innerhalb bestimmter Grenzen variieren. Die Gesamtdicke der Folie liegt im Bereich von 3 bis 80 µm, insbesondere von 4 bis 50 µm, vorzugsweise von 5 bis 30 µm, wobei auf die Basisschicht B ein relativer Anteil von vorzugsweise 5 bis 95 % an der Gesamtdicke der Folie entfällt.

Die Polymeren für die Basisschicht B und die Deckschichten A und C werden drei getrennten Extrudern zugeführt. Etwa vorhandene Fremdkörper oder Verunreinigungen lassen sich aus der Polymerschmelze vor der Extrusion durch geeignete Filter entfemen. Die Schmelzen werden dann in einer Mehrschichtdüse zu flachen Schmelzefilmen ausgeformt und übereinander geschichtet. Anschließend wird der Mehrschichtfilm mit Hilfe einer innengekühlten Kühlwalze aus poliertem Edelstahl und gegebenenfalls weiteren Walzen abgezogen und zu einer amorphen Vorfolie verfestigt.

Die Erfindung betrifft weiterhin ein Verfahren zur Herstellung der erfindungsgemäßen Polyesterfolie nach dem an sich bekannten Koextrusionsverfahren.

Im Rahmen dieses Verfahrens wird so vorgegangen, dass die den einzelnen Schichten der Folie entsprechenden Schmelzen durch eine Breitschlitzdüse koextrudiert werden, die so erhaltene Folie zur Verfestigung auf einer oder mehreren Walze/n abgezogen wird, die Folie anschließend biaxial gestreckt (orientiert), die biaxial gestreckte Folie danach thermofixiert und gegebenenfalls an der zur Behandlung vorgesehenen Oberflächenschicht corona- oder flammbehandelt wird.

Die biaxiale Streckung (Orientierung) wird im Allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist. Dies führt zu einer Orientierung der Molekülketten. Das Strecken in Längsrichtung lässt sich mit Hilfe zweier entsprechend dem angestrebten Streckverhältnis mit unterschiedlichen Geschwindigkeiten rotierenden Walzen durchführen. Zum Querstrecken benutzt man einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Nach dem Längsstrecken und vor dem Querstrecken kann man eine oder beide Oberfläche(n) der Folie nach bekannten Verfahren In-line beschichten. Die In-Line-Beschichtung kann beispielsweise zu einer verbesserten Haftung einer eventuell aufgebrachten Druckfarbe, aber auch zur Verbesserung des antistatischen Verhaltens oder des Verarbeitungsverhaltens dienen.

In einer vorteilhaften Ausführungsform der Folie nach der vorliegenden Erfindung erweist es sich als günstig, wenn die planare Orientierung $\Delta p$ der Folie nicht so groß gewählt wird. Sie sollte dann im Bereich $\Delta p \leq 0{,}168$, bevorzugt $\Delta p \leq 0{,}166$ und besonders bevorzugt $\Delta p \leq 0{,}163$ liegen. In diesem Fall wird die Festigkeit der Folie in Dickenrichtung so groß, dass die hohe Metallhaftung voll auf die Folie übertragen werden kann, ohne dass die Folie einreißt und weiter reißt.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0{,}169$ mit dem Parametersatz $\lambda_{MD} = 4{,}8$ und $\lambda_{TD} = 4{,}0$, die Strecktemperaturen in Längs- und in Querrichtung $T_{MD} = 80$ bis 115 °C und $T_{TD} = 80$ bis 125 °C, so erhält man durch Erhöhung der Längsstrecktemperatur auf $T_{MD} = 80$ bis 125 °C oder durch Erhöhung der Querstrecktemperatur auf $T_{TD} = 80$ bis 135 °C oder durch Absenkung des Längsstreckverhältnisses auf $\lambda_{MD} = 4{,}3$ oder durch Absenkung des Querstreckverhältnisses auf $\lambda_{TD} = 3{,}7$ eine planare Orientierung $\Delta p$, die im gewünschten Bereich liegt. Die Folienbahngeschwindigkeit betrug hierbei 340 m/min und der SV-Wert des Materials etwa 730. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Zur Einstellung weiterer gewünschter Eigenschaften kann die Folie zusätzlich beschichtet werden. Typische Beschichtungen sind dehäsiv, antistatisch, schlupfverbessernd oder weitere haftvermittelnd wirkende Schichten. Es bietet sich an, diese zusätzlichen Schichten über inline coating mittels wässriger Dispersionen vor dem Streckschritt in Querrichtung auf die Folie aufzubringen.

Vorteile der Erfindung

Die erfindungsgemäße Folie zeichnet sich durch eine hervorragende Metallhaftung, ein sehr gutes Handling und durch ein sehr gutes Verarbeitungsverhalten aus.

Außerdem ist bei der Herstellung der Folie gewährleistet, dass das Regenerat in einer Menge bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die Folie eignet sich demnach hervorragend für den Einsatz in der flexiblen Verpackung und zwar insbesondere dort, wo eine hervorragende Metallhaftung voll zum Tragen kommt. Dies sind beispielsweise so genannte "Bag-in-box Verpackungen", in denen ein Mehrschichtverbund aus metallisiertem PET und beidseitig hierauf kaschierter Polyethylen-Folie verwendet wird.

Die nachstehende Tabelle (Tabelle 1) fasst die wichtigsten erfindungsgemäßen Folieneigenschaften noch einmal zusammen.

Tabelle 1

| DECKSCHICHT A | Bereiche gemäß Erfindung | | | Einheit | Mess-methode |
|---|---|---|---|---|---|
| | allgemein | bevorzugt | besonders bevorzugt | | |
| Metallhaftung | > 4 | > 4,5 | > 5 | N/25mm | intern |
| Rissbildung | keine | | | Anzahl | |
| Planare | ≤ 0,168 | ≤ 0,166 | ≤ 0,163 | | intern |

Zur Charakterisierung der Rohstoffe und der Folien wurden die folgenden Messwerte benutzt:

SV-Wert (standard viscosity)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6,907 \cdot 10^{-4} \, SV \, (DCE) + 0,063096 \, [dl/g]$$

**Metallhaftung**

Das Folienmuster (300 mm längs x 180 mm quer) gemäß der vorliegenden Erfindung wird vor dem Verkleben auf einen glatten Karton (200 mm längs x 180 mm quer; ca. 400 g/m$^2$, gebleicht, Außenlagen gestrichen) gelegt, die überstehenden Folienenden sind auf die Rückseite umzuschlagen und mit Klebeband zu fixieren.
Die Verklebung der Folie gemäß der vorliegenden Erfindung mit einer Standardpolyesterfolie von 12 um Dicke (z.B. Melinex 800) erfolgt mit einem Rakelgerät und Rakelstab Nr. 3 der Fa. Erichsen, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels (4 min) wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| Klebstoffmenge | 5+/- 1 g/m$^2$ |
| Lüften nach Auftrag des Klebers | 4 min +/- 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem 25 +/- 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund wird in die untere Spannbacke der Zugprüfmaschine (Typ: Zwick) eingespannt (Klemmabstand 100 mm). Das nicht kaschierte Ende der Folie wird so in die oberer Spannbacke eingespannt, dass sich ein Schälwinkel von 180° ergibt. Angegeben wird die mittlere Schälkraft in N/25 mm die nötig ist, um bei einer Abzugsgeschwindigkeit von 100 mm/min den Verbund zu trennen, gerundet auf eine Nachkommastelle.

| Probenbreite | 25 mm |
| Vorkraft | 0,1 N |
| Messlänge | 25 mm |

(fortgesetzt)

| Abzugsgeschwindigkeit bis Vorkraft | 25 mm/min |
|---|---|
| Vorweg | 5 mm |
| Prüfweg | 40 mm |
| Empfindlichkeit | 0,01 N |
| Abzugsgeschwindigkeit | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist.

**Reibung**

Die Reibung wurde nach DIN 53 375 bestimmt. Die Gleitreibungszahl wurde 14 Tage nach der Produktion gemessen.

**Bestimmung der planaren Orientierung $\Delta$p**

Die Bestimmung der planaren Orientierung erfolgt über die Messung der Brechungsindizes mit dem Abbe-Refraktometer nach der internen Betriebsvorschrift.

Probenvorbereitung

| Probengröße und Probenlänge | 60 bis 100 mm |
|---|---|
| Probenbreite | entspricht Prismenbreite von 10 mm |

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_a$ (=$n_z$) muss die zu messende Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala so weit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube so weit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist so lange zu drehen, bis der Übergang deutlich zu sehen ist. Es gilt das Gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ (= $n_z$ ) bestimmt.

Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD} \qquad \Delta p = (n_{MD} + n_{TD})/2 - n_z \qquad n_{av} = (n_{MD} + n_{TD} + n_z)/3$$

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht B zugeführt. Ebenfalls wurden Chips aus Polyethylenterephthalat und einem Füllstoff dem Extruder für die nicht metallhaftende Deckschicht C zugeführt.

Daneben wurden Chips aus einem linearen Polyester hergestellt, der aus einem amorphen Copolyester mit 78 mol-% Ethylenterephthalat und 22 mol-% Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die metallhaftende Deckschicht A zugeführt.

Es wurde durch Koextrusion und anschließende stufenweise Orientierung in Längsund Querrichtung eine transparente dreischichtige Folie mit ABC-Aufbau und einer Gesamtdicke von 12 μm hergestellt. Die Dicke der jeweiligen Deckschichten ist der Tabelle 2 zu entnehmen.

Deckschicht A, Mischung aus:

| | |
|---|---|
| 97,0 Gew.-% | Copolyester mit einem SV-Wert von 800 |
| 3,0 Gew.-% | Masterbatch aus 97,75 Gew.-% Copolyester (SV-Wert von 800) und 1,0 Gew.-% ®Sylobloc 44 H (synthetisches $SiO_2$ der Fa. Grace) und 1,25 Gew.-% ®Aerosil TT 600 (pyrogenes $SiO_2$ der Fa. Degussa) |

Basisschicht B:

| | |
|---|---|
| 100,0 Gew.-% | Polyethylenterephthalat mit einem SV-Wert von 800 |

Deckschicht C, Mischung aus:

| | |
|---|---|
| 88 Gew.-% | Polyethylenterephthalat mit einem SV-Wert von 800 |
| 12 Gew.-% | Masterbatch aus 97,75 Gew.-% Copolyester (SV-Wert von 800) und 1,0 Gew.-% Sylobloc 44 H (synthetisches $SiO_2$ der Fa. Grace) und 1,25 Gew.-% Aerosil TT 600 (pyrogenes $SiO_2$ der Fa. Degussa) |

Die Herstellungsbedingungen in den einzelnen Verfahrensschritten waren:

| Extrusion | Temperaturen | A-Schicht: | 270 °C |
|---|---|---|---|
| | | B-Schicht: | 290 °C |
| | | C-Schicht: | 290 °C |
| | Düsenspaltweite: | | 2,5 mm |
| | Temperatur der Abzugswalze: | | 30 °C |

(fortgesetzt)

| Längsstreckung | Temperatur: | 80-125 °C |
| | Längsstreckverhältnis: | 4,2 |
| Querstreckung | Temperatur: | 80-135 °C |
| | Querstreckverhältnis: | 4,0 |
| Fixierung | Temperatur | 230 °C |
| | Dauer | 3 s |

Die Folie hatte eine Metallhaftung von 6,6 N/25 mm und zeigt das gewünschte Handling und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Dicke der metallhaftenden Deckschicht A erhöht. Die Metallhaftung blieb gut, es konnten jedoch im Lichtkasten erste Risse in der metallisierten Metallschicht erkannt werden.

**Beispiel 3**

Im Vergleich zu Beispiel 1 wurde der Copolyester mit einem anderen Molverhältnis von 60 mol-% Ethylenterephthalat- und 40 mol-% Ethylenisophthalat-Einheiten eingesetzt. Die Metallhaftung hat sich hierdurch leicht verschlechtert und betrug 6,0 N/25 mm.

**Vergleichsbeispiel V1**

Es wurde Beispiel 1 aus EP-A-0 144 878 nachgestellt. Die Metallhaftung der Folie betrug 3,0 N/25 mm

**Vergleichsbeispiel V2**

Es wurde Beispiel 1 aus EP-A-0 035 838 nachgestellt. In der Basisschicht wurde Polyethylenterephthalat eingesetzt, in der Deckschicht ein Polymer mit 82 mol-% Ethylenterephthalat und 18 mol-% Ethylenisophthalat als Säurekomponente. In die Deckschicht wurde $SiO_2$ mit einem gewichtsmittleren Durchmesser von 1 μm in einer Konzentration von 0,25 Gew.-%, bezogen auf das Gewicht der Deckschicht, eingebracht. Die Deckschicht hatte eine Dicke von 2,25 μm bei einer Foliengesamtdicke von 15 μm. In der metallisierten Metallschicht konnten im Lichtkasten Risse erkannt werden.

Tabelle 2

| Bei-spiel | Foliendicke mm | Schichtdicken mm | | | Folien-aufbau | Metallhaftung N/25 mm | Verhalten bei der Metallhaftungs-methode | $\Delta p$ |
|---|---|---|---|---|---|---|---|---|
| | | A | B | C | | | | |
| B 1 | 12 | 0,7 | 9,8 | 1,5 | ABC | 6,6 | vollflächige Abtrennung | 0,166 |
| B 2 | 12 | 0,9 | 9,6 | 1,5 | ABC | 6,6 | vollflächige Abtrennung | 0,166 |
| B 3 | 12 | 0,9 | 9,6 | 1,5 | ABC | 6,0 | vollflächige Abtrennung | 0,166 |
| V 1 | 12 | 0,75 | 9,75 | 1,5 | ABC | 3,0 | Folie reißt beim Test ein | 0,166 |
| V 2 | 15 | 2,25 | 12,25 | - | AB | 6,4 | vollflächige Abtrennung | 0,164 |

**Patentansprüche**

1.  Verwendung einer koextnrdierten, biaxial orientierten, mehrschichtigen Polyesterfolie mit hoher Metallhaftung aus mindestens einer Basisschicht B und mindestens einer auf der Basisschicht B aufgebrachten, metallhaftenden Deckschicht A bestehend aus einem amorphen Copolyester welcher Ethylenterephthalat in einem Anteil von 40 bis 99 mol-% und Ethylenisophthalat in einem Anteil von 60 bis 1 mol-% enthält, bei der die metallhaftende Deckschicht A eine Metallhaftung von ≥ 4 N/25 mm und eine Schichtdicke von s 1,6 µm aufweist, in Bag-in-box Verpackungen.

2.  Verwendung nach Anspruch 1, **dadurch gekennzeichnet, dass** die metallhaftende Deckschicht A eine Schichtdicke von ≤ 1,2 µm aufweist.

3.  Verwendung nach einem oder mehreren der Ansprüche 1 bis 2, **dadurch gekennzeichnet, dass** die Folie einen dreischichtigen Aufbau mit einer Basisschicht B, einer metallhaftenden Deckschicht A und einer weiteren Deckschicht C besitzt, wobei die Deckschicht C gleich oder verschieden zur Deckschicht A sein kann.

4.  Verwendung nach einem oder mehreren der Ansprüche 1 bis 3, **dadurch gekennzeichnet, dass** die Basisschicht B zusätzlich Additive, wie Stabilisatoren und/oder Antiblockmittel enthält, dass die Menge an Antiblockmittel in der Basisschicht B im Bereich von 0 bis 0,15 Gew.-% liegt, und dass die mittlere Korngröße der Antiblockmittel in der Basisschicht B im Bereich von größer/gleich 1 µm liegt.

5.  Verwendung nach einem oder mehreren der Ansprüche 1 bis 4, **dadurch gekennzeichnet, dass** die Deckschichten A und C zusätzlich Additive, wie Stabilisatoren und/oder Antiblockmittel enthalten, dass als Antiblockmittel Teilchen mit einem mittleren Primärpartikeldurchmesser im Bereich von größer/gleich 1 µm eingesetzt werden und dass die Deckschichten A und C mehr Pigmente als die Basisschicht B enthalten, wobei die Pigmentkonzentration in den Deckschichten A und C im Bereich von 0,0 bis 1,0 Gew.-% liegt.

6.  Verwendung nach einem oder mehreren der Ansprüche 1 bis 5, **dadurch gekennzeichnet, dass** die Schichtdicke der Deckschicht C im Bereich größer/gleich 0,1 µm liegt, wobei die Schichtdicken der Deckschichten A und C gleich oder verschieden sein können.

7.  Verwendung nach einem oder mehreren der Ansprüche 1 bis 6, **dadurch gekennzeichnet, dass** die Gesamtdicke der Folie im Bereich von 3 bis 80 µm liegt, wobei auf die Basisschicht B ein relativer Anteil im Bereich von vorzugsweise 5 bis 95 % an der Gesamtdicke der Folie entfällt.

8.  Verwendung nach einem oder mehreren der Ansprüche 1 bis 7, **dadurch gekennzeichnet, dass** die planare Orientierung Δp der Folie im Bereich Δp ≤ 0,168 liegt.

9.  Verwendung nach einem oder mehreren der Ansprüche 1 bis 8, **dadurch gekennzeichnet, dass** anfallendes Verschnittmaterial als Regenerat in einer Menge im Bereich von 20 bis 60 Gew.-%, bezogen auf das Gesamtgewicht der Folie, wieder bei der Herstellung der Folie eingesetzt wird.

**Claims**

1.  The use, in bag-in-box packs, of a coextruded, biaxially oriented, multilayer polyester film with high metal adhesion made from at least one base layer B and from at least one metal-adherent outer layer A applied to the base layer B and composed of an amorphous copolyester which contains from 40 to 99 mol% of ethylene terephthalate and from 60 to 1 mol% of ethylene isophthalate, wherein the metal-adherent outer layer A has a metal adhesion of ≥ 4 N/25 mm and a thickness of ≤ 1.6 µm.

2.  The use as claimed in claim 1, wherein the metal-adherent outer layer A has a thickness of ≤ 1.2 µm.

3.  The use as claimed in one or both of claims 1 and 2, wherein the film has a three-layer structure with a base layer B, a metal-adherent outer layer A and another outer layer C, where the outer layer C may be i dentical with or different from the outer layer A.

4.  The use as claimed in one or more of claims 1 to 3, wherein the base layer B also comprises additives, such as stabilizers and/or anti blocking agents, and wherein the amount of antiblocking agent in the base layer B is in the range from 0 to 0.15% by weight, and wherein the average particle size of the antiblocking agents in the base layer B is in the range greater than or equal to 1 μm.

5.  The use as claimed in one or more of claims 1 to 4, wherein the outer layers A and C also comprise additives, such as stabilizers and/or antiblocking agents, and wherein the antiblocking agents used comprise particles with an average primary particle diameter in the range greater than or equal to 1 μm, and wherein the outer layers A and C comprise more pigments than the base layer B, the pigment concentration in the outer layers A and C being in the range from 0.0 to 1.0% by weight.

6.  The use as claimed in one or more of claims 1 to 5, wherein the thickness of the outer layer C is in the range greater than or equal to 0.1 μm, and the thicknesses of the outer layers A and C may be identical or different.

7.  The use as claimed in one or more of claims 1 to 6, wherein the total thickness of the film is in the range from 3 to 80 μm, and the proportion made up by the base layer B is preferably in the range from 5 to 95% of the total thickness of the film.

8.  The use as claimed in one or more of claims 1 to 7, wherein the planar orientation $\Delta p$ of the film is in the range $\Delta p \leq 0.168$.

9.  The use as claimed in one or more of claims 1 to 8, wherein cut material produced is reintroduced to the film production process as regrind in amounts in the range from 20 to 60% by weight, based on the total weight of the film.

## Revendications

1.  Utilisation d'un film polyester à plusieurs couches co-extrudé, orienté biaxialement, avec une bonne adhérence au métal, comprenant au moins une couche de base B et au moins une couche de recouvrement A adhérant au métal, déposée sur la couche de base B et formée par un copolyester amorphe qui contient du téréphtalate d'éthylène dans une proportion de 40 à 99 % en moles et de l'isophtalate d'éthylène dans une proportion de 60 à 1 % en moles, dans laquelle la couche de recouvrement A adhérant au métal possède une adhérence au métal $\geq$ 4 N/ 25 mm et une épaisseur de couche $\leq$ 1,6 μm, dans des emballages bag-in-box.

2.  Utilisation selon la revendication 1, **caractérisée en ce que** la couche de recouvrement A adhérant au métal présente une épaisseur de couche $\leq$ 1,2 μm.

3.  Utilisation selon la revendication 1 ou 2, **caractérisée en ce que** le film présente une structure à trois couches avec une couche de base B, une couche de recouvrement A adhérant au métal et une autre couche de recouvrement C, la couche de recouvrement C étant identique à la couche de recouvrement A ou différente de celle-ci.

4.  Utilisation selon une ou plusieurs des revendications 1 à 3, **caractérisée en ce que** la couche de base B contient en plus des additifs, tels que des agents stabilisants et/ou des agents anti-blocage, **en ce que** la quantité d'agents anti-blocage dans la couche de base B se situe dans le domaine de 0 à 0,15 % en poids, et **en ce que** la granulométrie moyenne des agents anti-blocage dans la couche de base B se situe dans le domaine supérieur ou égal à 1 μm.

5.  Utilisation selon une ou plusieurs des revendications 1 à 4, **caractérisée en ce que** les couches de recouvrement A et C contiennent en plus des additifs, tels que des agents stabilisants et/ou des agents anti-blocage, **en ce que** les agents anti-blocage utilisés sont des particules avec un diamètre moyen de particules primaires dans le domaine supérieur ou égal à 1 μm, et **en ce que** les couches de recouvrement A et C contiennent davantage de pigments que la couche de base B, la concentration en pigments dans les couches de recouvrement A et C se situant dans le domaine de 0,0 à 1,0 % en poids.

6.  Utilisation selon une ou plusieurs des revendications 1 à 5, **caractérisée en ce que** l'épaisseur de la couche de recouvrement C se situe dans le domaine supérieur ou égal à 0,1 μm, les épaisseurs des couches de recouvrement A et C pouvant être identiques ou différentes.

7.   Utilisation selon une ou plusieurs des revendications 1 à 6, **caractérisée en ce que** l'épaisseur totale du film se situe dans le domaine de 3 à 80 $\mu$m, la part relative de la couche de base B par rapport à l'épaisseur totale du film étant de préférence de l'ordre de 5 à 95 %.

8.   Utilisation selon une ou plusieurs des revendications 1 à 7, **caractérisée en ce que** l'orientation planaire $\Delta p$ du film se situe dans le domaine $\Delta p \leq 0,168$.

9.   Utilisation selon une ou plusieurs des revendications 1 à 8, **caractérisée en ce que** les chutes de matériau produites sont réutilisées dans la fabrication du film sous forme de matière recyclée dans une quantité de l'ordre de 20 à 60 % en poids par rapport au poids total du film.